# EUROPEAN PATENT SPECIFICATION

(11) **EP 3 978 459 B1**
(45) Date of publication and mention of the grant of the patent: **12.02.2025**
(21) Application number: 20831731.3
(22) Date of filing: 08.05.2020
(51) Int. Cl.: C05F 11/00, C05F 11/10, C05G 5/20, A01N 65/03, B01D 11/02

(54) **METHOD FOR OBTAINING AN ALGAE EXTRACT**
VERFAHREN ZUR GEWINNUNG EINES ALGENEXTRAKTS
PROCÉDÉ D'OBTENTION D'UN EXTRAIT D'ALGUES

(30) Priority: 30.05.2019 ES 201930478
(43) Date of publication of application: 06.04.2022
(73) Proprietor: Plymag, S.L., 03780 Pego (Alicante) (ES)
(72) Inventor: FELIÚ SENDRA, Fernando, 03780 Pego (Alicante) (ES); FELIÚ SENDRA, Carlos, 03780 Pego (Alicante) (ES)
(74) Representative: Ungria López, Javier
(86) International application number: PCT/ES2020/070292
(87) International publication number: WO 2020/260734

(56) References cited:
- WO-A1-2013/108188
- WO-A1-2016/181411
- WO-A1-2019/095002
- GB-A- 2 150 552
- GB-A- 2 150 552
- VERKLEIJ F. N.: "Seaweed Extracts in Agriculture and Horticulture: a Review", BIOLOGICAL AGRICULTURE AND HORTICULTURE, vol. 8, no. 4, 31 December 1992 (1992-12-31), pages 309 - 324, XP055938177, ISSN: 0144-8765, Retrieved from the Internet <URL:http://dx.doi.org/10.1080/01448765.1992.9754608> [retrieved on 20220704], DOI: 10.1080/01448765.1992.9754608

## Description

The present invention pertains to the technical field of algae extracts and, particularly, to an improved method for obtaining an algae extract. More particularly, the present invention relates to a method for obtaining an algae extract according to claim 1.

The present invention also relates to the use of the product obtained by means of the method claimed as a biostimulant in plant crops.

### BACKGROUND OF THE INVENTION

Today, there are substances which are gaining significant importance in the agricultural industry, said substances being called agricultural biostimulants and act on plant physiology in different manners and through different pathways to improve crop vigor, yield, and harvest quality. The origins of said products varied, and given that, when applied to plants, they are capable of improving nutrient absorption and assimilation efficiency and biotic or abiotic stress tolerance in said plants, or improving some of their agronomical characteristics, the use thereof has become increasingly widespread in a large variety of crops.

One of the primary origins of agricultural biostimulants is algae extracts. In fact, there are currently several companies around the world which produce algae extracts in the agricultural sector, i.e., the company Kelp Products International which produces an extract from the *Ecklonia maxima* algae species and is the proprietor of patent no. ZA201300362 (B), the company Afrikelp which also produces various algae extracts for proprietary products and for other companies of the agricultural sector, and the company PLYMAG, proprietors of the present patent application.

To enable preparing biostimulants originating from algae, companies in the sector specializing in products of this type have developed different techniques to enable obtaining the extract thereof.

The aforementioned patent ZA201300362 (B) describes a process for obtaining an algae extract called "cold cell bursting technique", a process consisting of cutting and washing the algae for subsequent introduction in a pressure chamber in which the raw material is subjected to an extremely high pressure comprised between 400 and 600 bar that is only maintained for a short period of time. Next, said pressure is quickly reduced to atmospheric pressure by means of using an exhaust valve. This abrupt change in pressure is what causes the cells to burst. Lastly, the liquid fraction is recovered, whereas waste in the form of pulp remains inside the chamber. An algae extract is thereby obtained without using chemical products, heat, freezing, or dehydration.

Furthermore, the company Afrikelp has also developed its own process for obtaining an algae extract called cold micronization process which is based on micronizing and filtering fresh algae without using any type of chemical product or high temperatures.

Nevertheless, both the process described in patent ZA201300362 (B) and that described by the company Afrikelp present a significant limitation because the yield in both processes is conditioned by the amount of starting material. In both methods, there is a need to start from a large amount of raw material in order to be able to obtain a large amount of extract, and this entails a high cost in terms of both raw material and during the process for obtaining the algae extract. GB2150552 discloses a method for producing a liquid fertilizer by extracting dried seaweed with water and removing the residual solids. The method comprises a treatment step at 90-105 °C and 584-722 kPa for 4-6 hours.

For this reason, the need to develop a new method for algae extraction which allows increasing the yield thereof, obtaining more extract with the same amount of algae, without losing the activity of said extract, has been observed.

Therefore, the object of the present invention is to provide a more economically viable and effective solution to the problem relating to the high costs and technological difficulties of the methods used today in the industry by means of a new method for obtaining an algae extract that is completely different from the earlier methods, starting from the raw material, the high process yield, in other words, obtaining a higher concentration of algae extract per unit of product volume, which further comprises surprisingly effective phytohormones.

### DESCRIPTION OF THE INVENTION

The present invention relates to a new method for obtaining an algae extract according to claim 1.

A dry residue expressed in % w/w which, in the context of the present invention, reflects the amount of product that remains upon removing all the water from the sample, is obtained in step (c). It serves as an illustrative example, in the case in which a dry residue of 3% w/w is obtained in step (c), this would indicate that if 100 g of the samples are taken and the water contained therein is eliminated, 3 g of dry residue will be obtained which, if no external component whatsoever has been added, will be 3 g of solid pure algae extract.

It should be pointed out that the method object of the invention is performed at an atmospheric pressure. In this regard, it should be indicated that the atmospheric pressure at a point refers to the "weight" of the air column above said point until the atmosphere ends. As can be understood, it is extremely difficult to set this value because air density decreases with height, affecting the mass, and accordingly the weight, in addition to varying with meteorological conditions. Generally, the value of atmospheric pressure can vary within 1 atm which corresponds with 101325 Pa, where it can vary based exclusively on atmospheric conditions as indicated above.

In a preferred embodiment of the present invention, the preservative used can be of the aqueous type and further comprises in its base composition disinfecting heterocycle and aldehyde compounds. Said use of the preservative has the purpose of prolonging the service life of the product, controlling the growth of any type of microorganism that may grow in said extract, causing a deterioration of the composition thereof.

In particular embodiments of the invention, the method may further comprise a step in which the solid phase obtained in step (c) is soaked again with an amount of water comprised between 0.1 and 10 times the amount of solids present in the extractor, for a period of time of 0.5 to 48 hours at a temperature between 40 and 98°C, with a new liquid phase and a new solid phase being obtained. After this step, the new liquid phase can be used in step (a) replacing the proportional amount of water used in said step (a), again repeating the process for obtaining an extract. Furthermore, the solid phase obtained in said step can be reused as fertilizer or animal feed, and can ultimately be disposed of.

According to the present invention, the filtration of the liquid phase obtained in step (c) is performed through a mesh filter having a known diameter, said diameter preferably being up to a maximum of 80 µm, even more preferably a maximum size of 50 µm.

One of the main features differentiating the method object of the invention from the methods existing in the state of the art described herein above is that the starting material is subjected to the solid-liquid extraction process at a high temperature and in atmospheric pressure.

**Table 1. Comparison of the method of patent application number ZA201300362(B), with respect to the method described herein.**

| | **Process object of the invention** | **Process of patent no.** ZA201300362(B**)** |
|---|---|---|
| **Presentation of the raw material (algae)** | Dehydrated | Fresh |
| **Pressure at the start** | Atmospheric | 400-600 bar |
| **Pressure at the end** of **the process** | Atmospheric | Atmospheric |

As indicated above, the method object of the invention is an alternative to the methods for obtaining an algae extract existing today in the state of the art, being completely novel and with a series of advantages indicated below.

The main advantage of the claimed method is that a concentration of active matter higher than that obtained with the known methods, and particularly with the method defined by patent no. ZA201300362(B), can be extracted. The main cause of limitation of the process developed by the company Kelp Products International is that the final concentration of its product is limited by the proportion of active matter/moisture in the initial starting raw material of the extraction method since the extract is obtained directly from fresh algae, without concentration or the addition of water.

On the contrary, the method object of the invention allows varying the extraction parameters to obtain a desired concentration, regardless of the quality of the raw material or the moisture of the algae.

Likewise, the claimed method allows different concentration ranges to be obtained since said method allows the temperature to be varied, in turn allowing the richness of the obtained extract to be controlled regardless of the quality of the algae used as raw material.

It should be pointed out that the claimed method, as indicated hereinabove, is performed in atmospheric pressure conditions, whereas the methods existing today in the state of the art use pressures comprised between 400 and 600 bars.

Another object of the present invention relates to an algae extract obtained by means of the claimed method. According to the invention, an algae extract having a surprisingly high auxin and cytokinetic activity, as shown in Examples 3 and 4 herein, is obtained.

Auxins are plant hormones which promote growth by facilitating cell elongation through their effects on cell wall components. In addition, they can promote cell division and are involved in the development of lateral and primary roots. However, high concentrations of this hormone may also have a negative effect on growth. Fruit growth is another phenomenon controlled by auxins, together with apical dominance of the terminal bud.

Cytokinins are phytohormones which promote cell division in tissues. In mature plants, one of the main sites of synthesis is the root from which cytokinins travel to the above-ground part through the xylem. Likewise, cytokinins have an antisenescent or juvenility maintenance effect. This effect is produced by the preservation of chlorophyll, protein, and nucleic acid levels, possibly because they reduce the degradation rate thereof and also because they maintain membrane integrity. In turn, cytokinin-induced nutrient mobilization, as well as the promotion of chloroplast development, have been described. These hormones are also involved in promoting the growth of lateral buds, and therefore, inhibiting apical dominance. The most well-known cytokinins are kinetin and zeatin.

Lastly, another object of the present invention is the use of a product obtained by means of the claimed method in the preparation of agricultural biostimulants.

### BRIEF DESCRIPTION OF THE FIGURES

To better understand the present specification, the following figures are attached as a non-limiting illustration of the invention:
- **Figure 1** shows the primary leaves of bean plants submerged in different treatments with indoleacetic acid (IAA) solutions and the extract obtained by means of the claimed method with respect to product to be tested, maintaining 1 cm of the petiole of the leaves.
- **Figure 2** shows the bean leaves in Petri dishes with a filter paper moistened with distilled water.
- **Figure 3** shows the development of primary roots in the petioles of bean leaves treated with the extract obtained by means of the claimed method.
- **Figure 4** is a graph showing the number of primary roots which have developed in the bean leaves exposed to treatments T, E, E 1:2, and E 1:5.
- **Figure 5** shows the development of callus (a) and primary roots (b) in the petioles of bean leaves treated with the extract obtained by means of the claimed method.
- **Figure 6** is a graph showing the relationship between the variables, i.e., the number of primary roots and the concentration of IAA, after 2 weeks of treatment.
- **Figure 7** shows the cytokinetic activity bioassay based on the maintenance of chlorophyll concentration. The analyzed treatments were from left to right and top to bottom: E, E 1:2, E 1:5, T, K-2, K-3, K-4, K-5, K-6.
- **Figure 8** is a graph showing the concentration of total chlorophylls in spinach leaves exposed for a week to treatments T, E, E 1:2, and E 1:5.
- **Figure 9** shows the state of chlorosis of the disks of spinach leaf after one week in dark conditions. The treatments that are compared in the image are from left to right: T, K-3, E, and E 1:2.
- **Figure 10** shows the disks of spinach leaves after one week of treatment in darkness. The treatments shown from left to right and from top to bottom are: T, KIN -3, KIN -4, KIN -5, KIN -6, E, and E 1:2.
- **Figure 11** is a graph showing the relationship between the variables, i.e., the concentration of total chlorophylls and kinetin.

### PREFERRED EMBODIMENT OF THE INVENTION

For the purpose of contributing to better understand the invention, and according to a practical embodiment thereof, a series of examples is attached as an integral part of this description: a comparative study of the extract obtained by means of the method with respect to other products found on the market, as well as auxin and cytokinetic activity studies of the extract obtained by means of the claimed method.

### Example 1: Method for obtaining an algae extract in which the raw material is the algae Ecklonia maxima.

The method according to the invention comprises the following phases:
(a) introducing a dehydrated algae mass with a moisture comprised between 5 and 15% w/w in a reactor with water in a proportional amount of kg water/kg algae of 9.29,
(b) allowing the mixture obtained in the preceding step to soak for a period of time of 3 to 6 hours at a temperature between 80 and 90°C, and then separating the solid phase from the liquid phase when the liquid phase has reached a dry residue of between 1.9 and 2.1% w/w,
(c) stabilizing the liquid phase obtained in the preceding step by adding 0.5% w/w of a preservative, and then filtering through a membrane with a pore size equal to or greater than 80 µm.

### Example 2: Comparison of the extract obtained by means of the claimed method when the raw material is the algae Ecklonia maxima.

Based on the extract obtained by means of the method described in Example 1, a comparison of the composition thereof with respect to other extracts obtained from *Ecklonia maxima* currently existing on the market today and used as biostimulants is performed.

**Table 2. Comparison of the composition of the different products existing on the market consisting of extracts obtained from Ecklonia maxima with respect to the Ecklonia maxima extract obtained in Example 1.**

| | Extract of the company Afrikelp | Extract of patent no. ZA201300362(B) | *Ecklonia maxima* extract obtained in Example 1 |
|---|---|---|---|
| Alginic acid (% w/w) | 0.508 | 0.680 | 2.755 |
| Laminarin (% w/w) | 0.035 | 0.044 | 0.200 |
| Fucoidan (% w/w) | 0.035 | 0.035 | 0.295 |
| Mannitol (% w/w) | 0.200 | 0.155 | 0.914 |
| Betaines (% w/w) | 0.001 | 0.002 | 0.012 |
| Gibberellins (ppm) | 0.765 | 0.500 | 4.800 |
| Cytokinins (ppm) | 0.480 | 0.600 | 5.555 |
| Auxins (ppm) | 0.500 | 0.512 | 4.568 |

### Example 3: Study on the auxin activity of the Ecklonia maxima extract obtained by means of the claimed method and described in Example 1.

In order to determine the auxin activity of the *Ecklonia maxima* extract obtained by means of the claimed method, leaves that were submerged in different treatments and dilutions of the extract obtained by means of the claimed method were used. At this point it must be clarified that some plants spontaneously produce roots in the terminations of excised leaves or cuttings. However, many other species do not develop roots, and treatment with auxins will allow said formation.

Natural auxin in plants is a very simple substance, the indoleacetic acid (IAA). This compound is synthesized in plants from the amino acid tryptophan. At the nursery level, synthetic auxins such as indolebutyric acid (IBA) and naphthaleneacetic acid (NAA) are used for vegetative propagation.

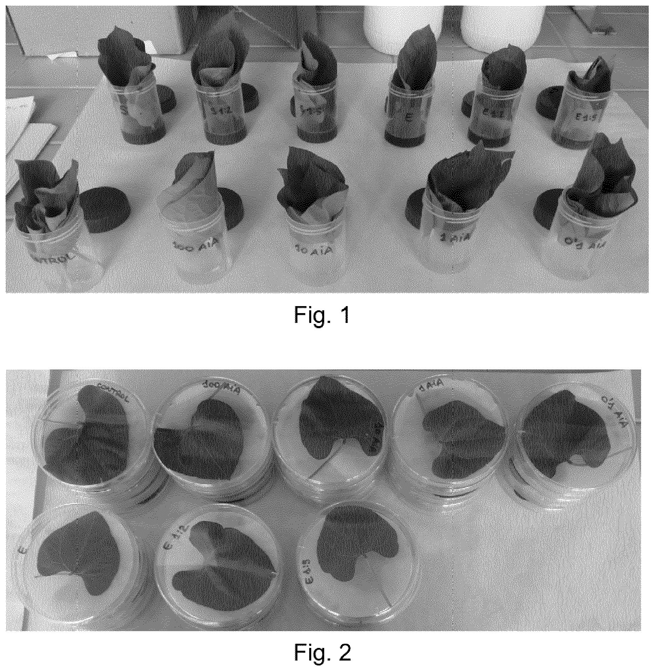

On this basis, for the auxin activity assays of the extract obtained by means of the claimed method, primary leaves of bean plants which were treated with IAA solutions having a known concentration along with the product to be tested were used, keeping 1 cm of the petiole of the leaves submerged for 2 hours in said solution (Figure 1). After these 2 hours, the excised leaves were transferred to Petri dishes with a filter paper moistened with distilled water (Figure 2). The dishes were kept for 2 weeks with diffused light and at room temperature in the laboratory. After 2 weeks, the development of roots in isolated leaves was analyzed by means of determining the number of roots that are formed.

The treatments to which the leaves were subjected are the following:
- Control (T) (distilled water)
- Extract without dilution (E)
- Extract with a 1:2 dilution (E 1:2)
- Extract with a 1:5 dilution (E 1:5)
- IAA 100 µg ml-1 (IAA 100)
- IAA 10 µg ml-1 (IAA 10)
- IAA 1 µg ml-1 (IAA 1)
- IAA 0.1 µg ml-1 (IAA 0.1)

The results were statistically analyzed by means of the IBM SPSS program (v. 24) through one-way analysis of variance ANOVA and a *posteriori* Tukey-b test (p<0.05).

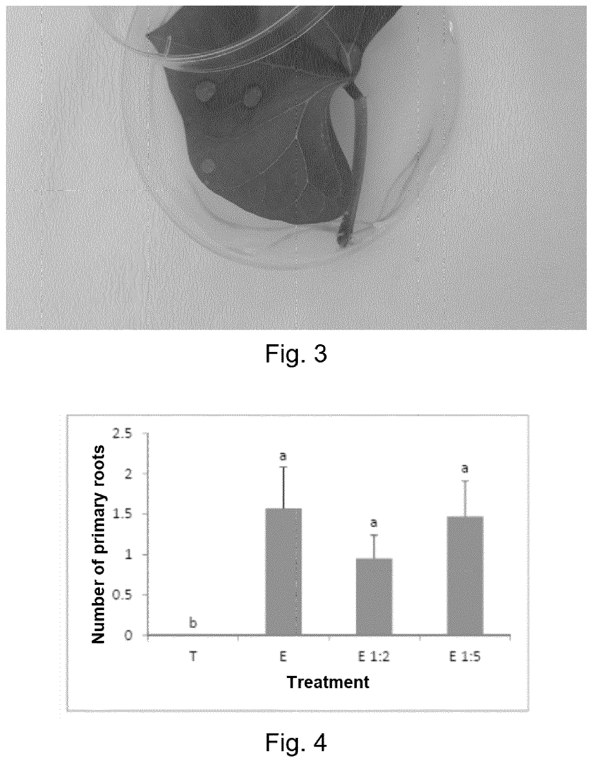

As can be observed in Figure 3, the extract obtained by means of the claimed method is significantly effective, inducing the development of roots in petioles of bean leaves. In addition, said effect was independent of the dilution of the product used (Figure 4). It should be pointed out that the control treatment did not show any root development whatsoever.

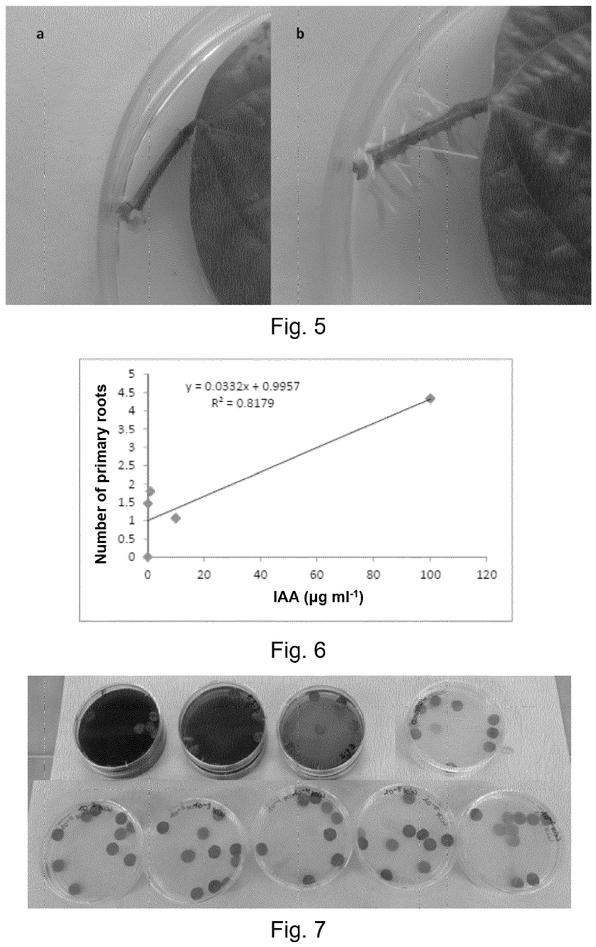

After two weeks of treatment with auxins or the extract, the petioles of the bean leaves showed, in some cases, the development of primary roots to a greater or lesser extent, from the formation of callus to well differentiated roots (Figure 5).

If a correlation is established between the number of roots developed in the excised leaves and the known concentration of IAA applied to the petioles of the leaves, the auxin activity of the tested product can be extrapolated. Figure 6 shows the mathematical relationship between both variables, after which the equivalent concentration of auxins of the product and the dilutions thereof were calculated.

The results of the auxin activity of the product are shown in Table 4:

**Table 4. Equivalent concentration of auxin in the extract obtained by means of the claimed method.**

| **Product** | **Auxin equivalence (ppm)** |
|---|---|
| E | 33.27±9.75 a |
| E 1:2 | 20.89±9.00 a |
| E 1:5 | 28.93±10.81 a |

The extract obtained by means of the claimed method exhibited an auxin activity equivalent to 25 ppm, this activity being understood not as the concentration of auxins present in the product, but as the capacity thereof to stimulate root development. This response was independent of the dilution of the product used.

### Example 4: Study on the cytokinetic activity of the Ecklonia maxima extract obtained by means of the claimed method and described in Example 1.

To enable determining the cytokinetic activity of the *Ecklonia maxima* extract obtained by means of the claimed method, excised spinach leaves were used.

The excised leaves suffer an irreversible loss of chlorophylls which translates into chlorosis, in addition to reduced protein and nucleic acid contents. This progressive senescent process can be delayed by means of applying cytokinins, with the concentration of chlorophylls being kept proportional to the concentration of hormone applied.

In this particular study, leaf disks of spinach leaves having a known surface area were obtained with punchers so that they can be maintained in a Petri dish. 20 ml of the corresponding solution were added to each Petri dish in which the leaf disks were placed with the underside in contact with the solution (Figure 7). The Petri dishes were kept for a week in darkness, after which the concentration of total chlorophylls (chlorophylls a+b) was spectrophotometrically quantified following extraction in 96% ethanol and in 80°C thermostatic bath.

The treatments compared were:
- Control (T) (distilled water)
- Extract without dilution (E)
- Extract with a 1:2 dilution (E 1:2)
- Extract with a 1:5 dilution (E 1:5)
- Kinetin 10-2 M (K-2)
- Kinetin 10-3 M (K-3)
- Kinetin 10-4 M (K-4)
- Kinetin 10-5 M (K-5)
- Kinetin 10-6 M (K-6)

The results were statistically analyzed by means of the IBM SPSS program (v. 24) through one-way analysis of variance ANOVA and a *posteriori* Tukey-b test (p<0.05).

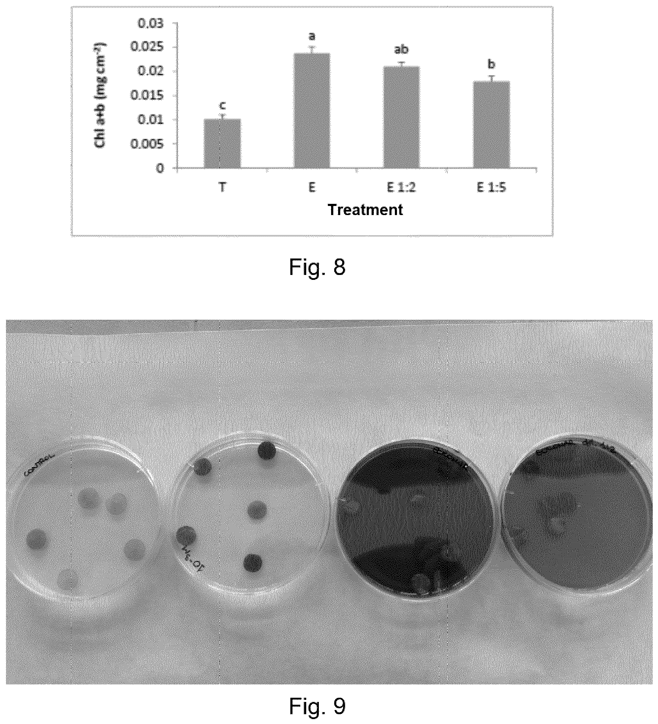

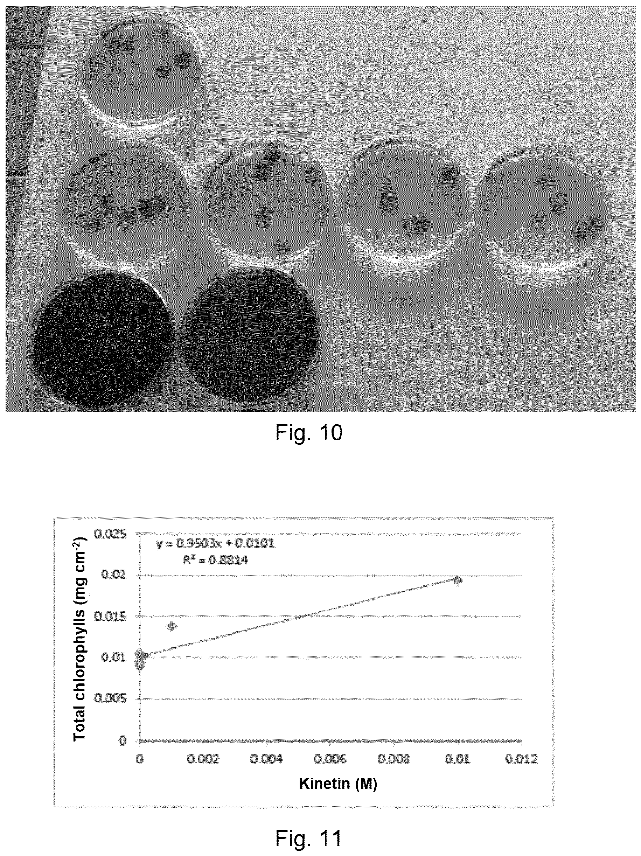

As can be observed in Figure 8, the extract obtained by means of the method of Example 1 was significantly effective, delaying leaf senescence determined as the degradation of chlorophylls after one week of tissue excision and in dark conditions. Diluting the product by the factor of 1:5, while reducing the concentration of chlorophylls in comparison with the undiluted product, showed a significant antisenescent effect. The comparison of the state of chlorosis of the leaf disks after the week of bioassay can be seen in Figure 9. While the control treatment showed clear signs of chlorosis, both the high concentrations of kinetin and the extract obtained in Example 1 allowed said senescence to be reduced. The visual comparison of all the treatments is shown in Figure 10. Reduction in chlorophyll degradation caused by the tested product could mean a better maintenance of the rate of photosynthesis, and therefore of production.

Furthermore, if a correlation is established between the concentration of chlorophylls present in the leaves and a known concentration of kinetin applied, the cytokinetic activity of the tested product can be extrapolated. Figure 11 shows as an example one of the correlations established between both variables. Once the mathematical relationship between them is established, the equivalent concentration of kinetin of the product and the dilutions thereof were calculated. The results are shown in Table 4.

**Table 5. Equivalent concentration of kinetin in the extract obtained in Example 1.**

| Product | [Kinetin] equivalence ppm |
|---|---|
| E | 2799.12±313.89 a |
| E 1:2 | 2119.98±205.00 ab |
| E 1:5 | 1313.47±85.47 b |

The equivalent concentration of kinetin in the extract obtained in Example 1 is in the order of 2500 ppm (Table 4), this cytokinetic activity being understood not as the concentration of cytokinins in the product, but as the antisenescent capacity thereof, delaying chlorophyll degradation. As would be expected, this activity decreases significantly when the product is diluted 5 times.

### Example 5: Method for obtaining an algae extract in which the raw material is the fresh algae Ecklonia maxima. (not according to the invention)

A method not according to the invention, in which the raw material is the algae *Ecklonia maxima,* is shown below. Said method comprises the following phases:
(a) introducing a hydrated algae mass with a moisture comprised between 70 and 85% w/w in a reactor with water in a proportional amount of kg water/kg algae of 0.5 and1.5,
(b) allowing the mixture obtained in the preceding step to soak for a period of time of 3 a 6 hours at a temperature between 80°C and 90°C, and then
(c) separating the solid phase from the liquid phase when the liquid phase has reached a dry residue of between 1.9 and 2.1% w/w,
(d) stabilizing the liquid phase obtained in the preceding step by adding 0.5% w/w of a preservative, and then filtering through a membrane with a pore size equal to or greater than 80 µm.

## Claims

1. A method for obtaining an *Ecklonia maxima* algae extract, **characterized in that** it comprises:
(a) introducing a dehydrated *Ecklonia maxima* algae mass with a moisture comprised between 5 and 15% w/w in a reactor with water in a proportional amount of kg water/kg algae of 9.29;
(b) allowing the mixture obtained in the preceding step to soak for a period of time of 3 to 6 hours and at a temperature between 80 and 90°C,
(c) separating the solid phase from the liquid phase when the liquid phase has reached a dry residue of between 1.9 and 2.1% w/w,
(d) stabilizing the liquid phase obtained in the preceding step by adding 0.5% w/w of a preservative and filtering through a filtration membrane with a pore size equal to or greater than 80 µm,
and wherein the method is carried out at atmospheric pressure.

2. The method according to claim 1, wherein the preservative is a disinfecting heterocycle, or an aldehyde compound, or any combination thereof.

3. The method according to claim 1 or 2, wherein the liquid phase obtained in step (c) is used in step (a) replacing the proportional amount of water used in said step (a).

4. A *Ecklonia maxima* algae extract obtained from the method according to any one of claims 1 to 3.

5. Use of the *Ecklonia maxima* algae extract according to claim 4 in the preparation of agricultural biostimulants.

## Patentansprüche

1. Verfahren zum Gewinnen eines Algen-Extrakts aus *Ecklonia maxima,* **dadurch gekennzeichnet, dass** es umfasst:
(a) Einleiten einer Algenmasse aus *Ecklonia maxima* mit einer Feuchtigkeit, die zwischen 5 und 15 % w/w liegt, in einen Reaktor mit Wasser in einem anteiligen Mengenverhältnis von kg Wasser/kg Algen von 9,29;
(b) Einweichen des in dem vorangehenden Schritt gewonnenen Gemischs über einen Zeitraum von 3 bis 6 Stunden und bei einer Temperatur zwischen 80 und 90 °C,
(c) Trennen der festen Phase von der flüssigen Phase, wenn die flüssige Phase einen Trockenrückstand zwischen 1,9 und 2,1 % w/w erreicht hat,
(d) Stabilisieren der in dem vorangehenden Schritt gewonnenen flüssigen Phase durch Zusetzen von 0,5 % w/w eines Konservierungsmittels sowie Filtern über eine Filtermembran mit einer Porengröße von 80 µm oder mehr,
und wobei das Verfahren bei atmosphärischem Druck ausgeführt wird.

2. Verfahren nach Anspruch 1, wobei das Konservierungsmittel ein desinfizierender Heterocyclus oder eine Aldehydverbindung oder eine beliebige Kombination daraus ist.

3. Verfahren nach Anspruch 1 oder 2, wobei die in Schritt (c) gewonnene flüssige Phase in Schritt (a) eingesetzt wird, um die in dem Schritt (a) eingesetzte anteilige Menge an Wasser zu ersetzen.

4. Algen-Extrakt aus *Ecklonia maxima,* der mit dem Verfahren nach einem der Ansprüche 1 bis 3 gewonnen wird.

5. Einsatz des Algen-Extrakts aus *Ecklonia maxima* nach Anspruch 4 bei der Herstellung landwirtschaftlicher Biostimulanzien.

## Revendications

1. Procédé pour obtenir un extrait d'algues *Ecklonia maxima,* **caractérisé en ce qu'**il comprend:
(a) l'introduction d'une masse d'algues *Ecklonia maxima* déshydratée avec une humidité comprise entre 5 et 15 % p/p dans un réacteur avec de l'eau dans une quantité proportionnelle kg d'eau/kg d'algues de 9,29;
(b) le trempage du mélange obtenu à l'étape précédente pendant une durée de 3 à 6 heures et à une température entre 80 et 90°C,
(c) la séparation de la phase solide de la phase liquide lorsque la phase liquide a atteint un résidu sec entre 1,9 et 2,1 % p/p,
(d) la stabilisation de la phase liquide obtenue à l'étape précédente par addition de 0,5 % p/p d'un conservateur et filtration à travers une membrane de filtration ayant une taille de pores égale ou supérieure à 80 µm,
et où le procédé est mis en oeuvre à pression atmosphérique.

2. Procédé selon la revendication 1, où le conservateur est un hétérocycle désinfectant, ou un composé aldéhydique, ou toute combinaison de ceux-ci.

3. Procédé selon la revendication 1 ou 2, où la phase liquide obtenue à l'étape (c) est utilisée à l'étape (a) en remplacement de la quantité proportionnelle d'eau utilisée à ladite étape (a).

4. Extrait d'algues *Ecklonia maxima* obtenu à partir du procédé selon l'une quelconque des revendications 1 à 3.

5. Utilisation de l'extrait d'algues *Ecklonia maxima* selon la revendication 4 dans la préparation de biostimulants agricoles.
